# EUROPÄISCHE PATENTSCHRIFT

(11) **EP 1 452 462 B1**
(45) Veröffentlichungstag und Bekanntmachung des Hinweises auf die Patenterteilung: **29.08.2007**
(21) Anmeldenummer: 04003526.3
(22) Anmeldetag: 17.02.2004
(51) Int. Cl.: B65G 1/137

(54) **System und Verfahren zum Kommissionieren von in Lagerbehältern befindlichen Artikeln**
System and method for commissioning articles disposed in storage containers
Système et procédé pour la préparation de commandes d'articles stockés dans des conteneurs

(30) Priorität: 25.02.2003 DE 10307949
(43) Veröffentlichungstag der Anmeldung: 01.09.2004
(73) Patentinhaber: WITRON Logistik + Informatik GmbH, 92711 Parkstein (DE)
(72) Erfinder: Winkler, Walter c/o Witron Logistik + Informatik GmbH, 92711 Parkstein (DE)
(74) Vertreter: Betten & Resch

(56) Entgegenhaltungen:
- EP-A- 0 847 939
- EP-A- 0 860 382
- EP-A- 1 083 135
- DE-U- 29 806 960
- US-A- 4 909 697

## Beschreibung

### Gebiet der Erfindung

Die Erfindung betrifft ein System und ein Verfahren zum Kommissionieren von in Behältern befindlichen Artikeln. Dabei kann es sich um beliebige zu lagernde Artikel sowie für diese Artikel geeignete Behälter einschließlich Kleinteilebehälter, Kleinladungsträger, Tablare oder Paletten handeln.

### Verwandter Stand der Technik

Aus dem Stand der Technik gemäß dem europäischen Patent EP 0 847 939 mit dem Titel "Verfahren und Vorrichtung zum Kommissionieren" ist ein sogenanntes dynamisches Picking-System (DPS) zum Lagern und integrierten effizienten Kommissionieren bekannt. Das DPS-Prinzip nutzt den Umstand aus, daß auf 80% der in einem Lager befindlichen Artikel lediglich 20% der Picks, d. h. der Greif- bzw. Umpackvorgänge beim Kommissionieren entfallen. Man unterscheidet daher zwischen zwei Artikeltypen, nämlich Schnelläufern und Langsamläufern. Schnelläufer sind diejenigen Artikel, die häufig bzw. in großen Mengen benötigt werden, d.h. einen Großteil der Picks (die oben erwähnten 80%) ausmachen. Die Langsamläufer dagegen sind diejenigen Artikel, die selten bzw. in kleinen Mengen benötigt werden und entsprechend nur 20% der Picks ausmachen (Pareto-Prinzip). Die Kommissionierung von Langsamläufer-Artikeln findet in der Regel nach dem Prinzip "Mann-zu-Ware" statt, d.h. der Kommissionierer bewegt sich in seinem Kommissionierbereich, der ungefähr 8 bis 14 m Regalbreite umfaßt, um jeweils Artikel zu picken und in einen bereitgestellten Auftragsbehälter umzuladen. Die Wege summieren sich im Laufe eines Arbeitstags zu einer erheblichen Wegstrecke, was zur Ermüdung des Kommissionierers und einer verringerten Kommissionierleistung führt. Außerdem ist das Prinzip "Mann-zu-Ware" aus ergonomischen Gesichtspunkten nachteilig, wenn die jeweiligen Entnahmebehälter in ihrer Höhe ungünstig (zu hoch bzw. zu niedrig) angeordnet sind oder die zu tragenden Artikel ein hohes Gewicht aufweisen.

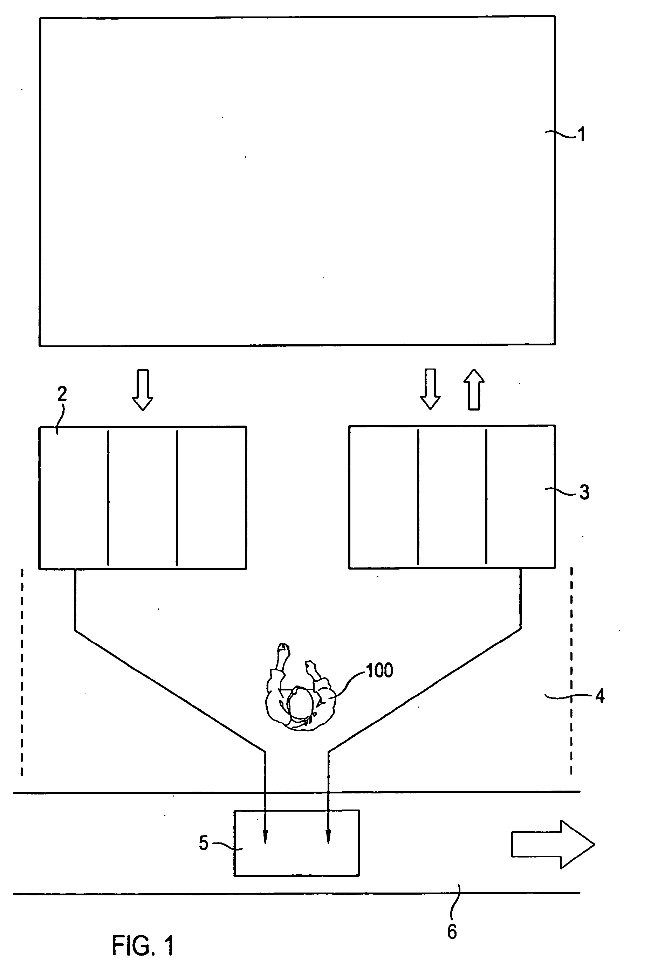

Nach dem DPS-Prinzip werden die Schnelläufer-Artikel ständig in statischen Durchlaufkanälen bereitgestellt, während die Langsamläufer-Artikel dynamisch bereitgestellt werden, d. h. jeweils mit Regalfahrzeugen in Wechselstellplätzen zugeteilt und nach ein- oder mehrmaliger Entnahme wieder ins Paletten- bzw. Behälterlager rückgelagert werden. Dieses Prinzip ist schematisch in Fig. 1 dargestellt. Die Artikel werden in einem automatisierten Behälterlager 1 gelagert. Von dort werden sie mit Regalfahrzeugen mittels Lastaufnahmemitteln abgeholt und entweder als Schnelläufer den statischen Durchlaufkanälen 2 oder als Langsamläufer den dynamischen Durchlaufkanälen bzw. Wechselstellplätzen 3 zugeführt. Der Transportfluß der Behälter bzw. Artikel ist in Fig. 1 durch Pfeile dargestellt. Die Durchlaufkanäle 2, 3 werden durch die Regalfahrzeuge von hinten aufgefüllt. Auf der Vorderseite des Durchlaufkanals befindet sich die Entnahmeposition, von der aus der Kommissionierer 100 die Artikel in seinem Kommissionierbereich 4, der wie oben erwähnt eine Regalbreite von ungefähr 10 m umfaßt, pickt. Der Kommissionierer entnimmt die Artikel aus den statischen Bereitstellplätzen 2 und den Wechselplätzen 3 und legt diese in einen bereitgestellten Auftragsbehälter 5, der anschließend mit einer Fördertechnik 6 abtransportiert wird. Die Wegstrecken, die vom Kommissionierer zu Fuß zurückgelegt werden müssen, bewegen sich in einer Größenordnung von 8 bis 14 m entsprechend der Regalfrontbreite des Kommissionierbereichs 4. Je länger die vom Kommissionierpersonal zurückzulegenden Wegstrecken sind, desto geringer fällt die Pickleistung, d. h. die Anzahl der gegriffenen Einheiten pro Stunde, aus.

Bei den aus dem Stand der Technik bekannten Systemen erfolgt die Kommissionierung am Kommissionierplatz nach wie vor nach dem Prinzip "Mann-zu-Ware", was die Pickleistung begrenzt und mit ergonomischen Nachteilen verbunden ist.

Die EP 0860382 A1 beschreibt ein Kommissioniersystem mit einem Behälterlager aufweisend Regalfahrzeuge zur Auslagerung von Lagerbehältern aus dem Regallager, ein Verteilsystem zum Verteilen der ausgelagerten Regalbehälter auf mehrere Kommissionierplätze sowie jedem Kommissionierplatz zugeordnete Sortierpuffer zur sequenzierten Auslagerung der Behälter an den KommissionierArbeitsplatz.

Die EP 1083135 A1 beschreibt ein halbautomatisches Kommissioniersystem für Hochregallager, wobei zwischen zwei Lagerregalfronten ein hängender und manuell bewegbarer Kommissionierwagen vorgesehen ist, in dem Bedienpersonen die in Ladekanälen bereitgestellten Behälter manuell kommissionieren.

### Zusammenfassung der Erfindung

Es ist daher Aufgabe der vorliegenden Erfindung, ein Kommissioniersystem und ein Kommissionierverfahren zur schaffen, bei dem die Kommissionierleistung erhöht und die körperliche Belastung des Kommissionierpersonals verringert ist.

Gelöst wird die Aufgabe durch ein Kommissioniersystem nach Anspruch 1 und ein Kommissionierverfahren nach Anspruch 14. Vorteilhafte Weiterbildungen der Erfindung ergeben sich aus den jeweiligen abhängigen Ansprüchen.

Erfindungsgemäß wird ein System zum Kommissionieren von in Lagerbehältern befindlichen Artikeln vorgeschlagen, welches ein Regallager zum Lagern der Lagerbehälter und einen Kommissionierpufferbereich zum Bereitstellen der Lagerbehälter auf Pufferplätzen aufweist. Die Lagerbehälter werden mittels eines Regalfahrzeugs zwischen Regallager und Kommissionierpufferbereichgefördert. In einer Regalgasse des Kommissionierpufferbereichs ist ein Pickfahrzeug verfahrbar, das Lastaufnahmemittel zur entsprechend einem Kommissionierauftrag sequenzierten Aufnahmen von Lagerbehältern sowie zum Rückfördem teilentleerter Lagerbehälter auf die Kommissionierplätze aufweist. An einem Kommissionierplatz werden die Lagerbehälter und Auftragsbehälter bereitgestellt zum Umladen der zu kommissionierenden Artikel durch eine Kommissionierperson vom Lagerbehälter in den Auftragsbehälter.

Das erfindungsgemäße Kommissioniersystem setzt konsequent das "Ware-zu-Mann''-Prinzip um, wodurch Pickleistung, Pickzuverlässigkeit und Ergonomie verbessert werden. Dem Kommissionierer werden die Lagerbehälter für die jeweilige Auftragssequenz aufeinanderfolgend zugeführt, und er kann die Artikel bequem an einem festen Kommissionierarbeitsplatz entnehmen und in einen ebenfalls für diesen Auftrag bereitgestellten Auftragsbehälter umladen. Die Zusammenstellung der für die Ausführung eines Kommissionierauftrags benötigten Lagerbehälter erfolgt mittels des Pickfahrzeugs, das die entsprechenden Lagerbehälter den Pufferplätzen im Kommissionierpufferbereich entnimmt und sequenziert dem Kommissionierplatz zuführt. Vorzugsweise handelt es sich bei dem Pickfahrzeug um ein leichtes, schnelles und beschleunigungsstarkes Fahrzeug mit einem, vorzugsweise zwei Aufnahmeplätzen für Lagerbehälter, welche vorzugsweise vertikal und gegebenenfalls in Längsrichtung verfahrbar sind. Die im Stand der Technik vom Kommissionierer ausgeführte Tätigkeit des Entnehmens der Artikel aus den Pufferplätzen wird automatisiert und durch das Pickfahrzeug ausgeführt. Erfindungsgemäß wird vom Kommissionierer nur noch der Umladevorgang positionsfest ausgeführt.

Vorzugsweise ist jedem Kommissionierarbeitsplatz ein Pickfahrzeug zugeordnet, welches die Lagerbehälter dem Kommissionierer in der vorbestimmten Reihenfolge zuführt.

Vorzugsweise schließt sich der Kommissionierpufferbereich vertikal oder horizontal an das Regallager an, wobei Regallager und Kommissionierbereich durch ein gemeinsames Regalfahrzeug befüllt werden können.

Zur Zuführung der Lagerbehälter vom Pickfahrzeug zum Kommissionierplatz ist vorzugsweise ein Stetigfördersystem wie beispielsweise ein Förderband oder ein Kettenförderer vorgesehen. Das Stetigfördersystem übernimmt vorzugsweise außerdem den Rücktransport teilweiser gefüllter Lagerbehälter (Restbehälter), die dann wieder an das Pickfahrzeug übergeben und im Kommissionierpufferbereich rückgelagert werden. Dort kann je nach Artikeltyp (Langsamläufer/Schnelläufer) eine statische Lagerung stattfinden oder ein weiterer Rücktransport ins Regallager.

Vorzugsweise ist ein weiteres Stetigfördersystem zum Zuführen der Auftragsbehälter und zum Abtransport von Leerbehältern vorgesehen.

Der Kommissionierplatz kann mit einem Bildschirm zur Signalisierung von Kommissionieranweisungen an den Kommissionierer sowie mit Lichtgitter-Sensoreinrichtungen an der Lagerbehälter-Kommissionierposition bzw. der Auftragsbehälter-Kommissionierposition zur Bestätigung der Durchführung eines Umladevorgangs versehen sein. Eine optimale Ergonomie des Pickarbeitsplatzes wird dadurch erreicht, daß Auftragsbehälter und/oder Lagerbehälter zum Kommissionierer hin geneigt und im rechten Winkel zueinander angeordnet sind.

Erfindungsgemäß wird außerdem ein Verfahren zum Kommissionieren von in Lagerbehältern befindlichen Artikeln vorgeschlagen, wobei die Lagerbehälter aus dem Regallager in einen Kommissionierpufferbereich gefördert und dort auf Pufferplätzen bereitgestellt werden. Mittels eines durch einen Lagerverwaltungsrechner gesteuerten Pickfahrzeugs werden die für einen Kommissionierauftrag benötigten Lagerbehälter von den Pufferplätzen sequenziert entnommen und aufeinanderfolgend einem Kommissionierplatz zugeführt und dort bereitgestellt, so daß ein Kommissionierer die für einen Kommissionierauftrag benötigten Artikel aus dem bereitgestellten Lagerbehälter in einen ebenfalls bereitgestellten Auftragsbehälter umladen kann. Der Rücktransport teilgefüllter Auftragsbehälter in den Kommissionierpufferbereich erfolgt ebenfalls mittels der automatisch gesteuerten Pickfahrzeuge.

Die Förderung der Auftragsbehälter von der Übergabe vom Pickfahrzeug zum Kommissionierplatz sowie die Förderung der Auftragsbehälter erfolgt vorzugsweise über eine Stetigfördertechnik.

Das Verfahren umfaßt vorzugsweise die Signalisierung von Umladevorgängen mittels einer Bildschirmanzeige.

### Kurzbeschreibung der Zeichnungen

Weitere Aufgaben, Merkmale und Vorteile der Erfindung ergeben sich aus der nachfolgenden Beschreibung konkreter Ausführungsbeispiele der Erfindung unter Bezugnahme auf die beiliegenden Zeichnungen.
- Fig. 1: zeigt schematisch ein dynamisches Picking-System gemäß dem Stand der Technik.
- Fig. 2: zeigt in Aufsicht eine Gesamtübersicht über ein erfindungsgemäßes Kommissioniersystem.
- Fig. 3: zeigt eine schematische Querschnittsansicht eines Ausführungsbeispiel eines erfindungsgemäßen Kommissioniersystems.
- Fig.4: ist eine Teilaufsicht eines Ausführungsbeispiels des erfindungsgemäßen Kommissioniersystems.
- Fig. 5: ist eine Teilaufsicht auf ein weiteres Ausführungsbeispiel eines erfindungsgemäßen Kommissioniersystems.
- Fig. 6A: zeigt eine schematische Seitenansicht eines Ausführungsbeispiels eines Pickfahrzeugs.
- Fig. 6B: zeigt eine schematische Stirnansicht eines Ausführungsbeispiels eines Pickfahrzeugs.
- Fig. 7: zeigt eine schematische Perspektivansicht des Pickfahrzeugs aus den Fig. 6A und 6B.
- Fig. 8: zeigt eine Querschnittsansicht eines Ausführungsbeispiels des erfindungsgemäßen Kommissioniersystems.
- Fig. 9: zeigt eine schematische Perspektivansicht eines Ausführungsbeispiels des erfindungsgemäßen Kommissioniersystems.
- Fig. 10: zeigt eine Detailansicht des Kommissioniersystems von Fig. 9.
- Fig.11: zeigt eine perspektivische Detailansicht des Kommissionierplatzes des in Fig. 9 und 10 dargestellten Kommissioniersystems.
- Fig. 12: zeigt in einem Flußdiagramm wesentliche Verfahrensschritte eines Ausführungsbeispiels des erfindungsgemäßen Kommissionierverfahrens.

### Beschreibung bevorzugter Ausführungsbeispiele

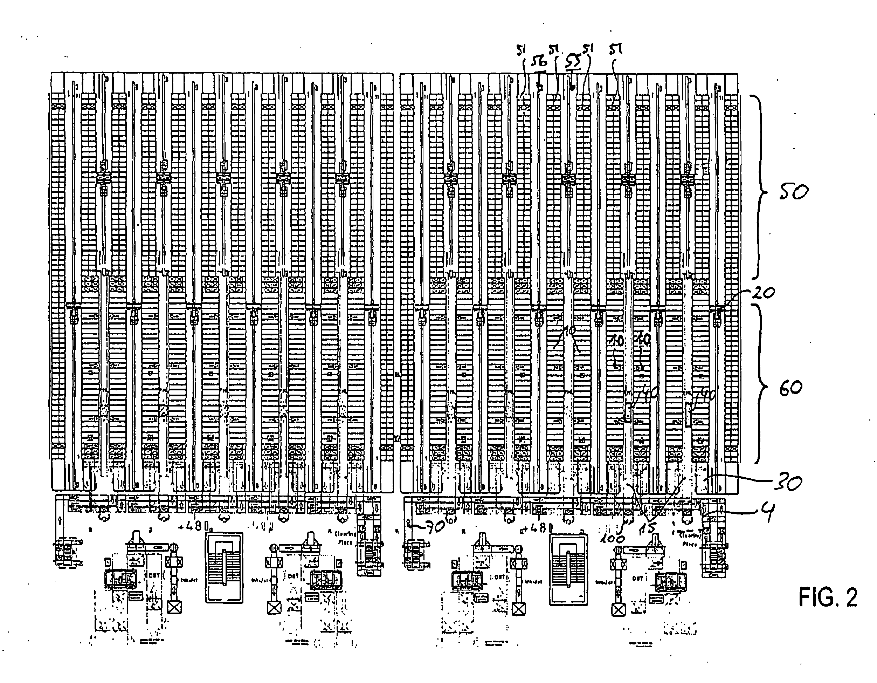

Fig. 2 zeigt in Draufsicht ein Ausführungsbeispiel eines erfindungsgemäßern Kommissioniersystems. Das Regallager ist als Hochregallager 50 ausgebildet mit einer Vielzahl paralleler Regalreihen 51. In den zwischen den Regalreihen 51 bestehenden Regalgassen 55, 56 sind Regalfahrzeuge zum Befüllen und Entleeren der Regale verfahrbar. In dem Regallager 50 werden die zu lagernden Artikel in Lagerbehältern gelagert, wobei es sich um Paletten, Tablare, Kleinladungsträger, Kunststoffbehälter oder dergl. handeln kann. Die Erfindung ist nicht eingeschränkt auf eine bestimmte Anordnung der Regale oder einen bestimmten Typ von Lagerbehältern.

An das Regallager 50 schließt sich ein Kommissionierpufferbereich 60 an, der bei dem in Fig. 2 gezeigten Ausführungsbeispiel als Verlängerung des Regallagers 50 ausgebildet ist. Regallager 50 und Kommissionierpufferbereich 60 können jedoch auch übereinander angeordnet sein, wobei beispielsweise der Kommissionierpufferbereich 60 im unteren Abschnitt eines Regallagers 50 ausgebildet ist. Regalfahrzeuge 20, die mit geeigneten Lastaufnahmemitteln versehen sind, fördern die Lagerbehälter aus dem Regallager 50 in den Kommissionierpufferbereich 60 und gegebenenfalls wieder zurück. Dadurch ist eine Beschickung des Kommissionierpufferbereichs 60 mit den Regalfahrzeugen 20 des Regallagers möglich. Im Kommissionierpufferbereich sind eine Vielzahl von Pufferplätzen 10 auf mehreren Ebenen übereinander sowie entlang der Regalfront nebeneinander vorgesehen, auf denen die Lagerbehälter einfach tief, zweifach tief oder dreifach tief bereitgestellt werden. Sogenannte Schnelläufer-Artikel werden vorzugsweise statisch gelagert, d. h. wenigstens zweifach tief bereitgehalten, wobei ein neuer gefüllter Behälter immer dann durch das Regalfahrzeug 20 von hinten nachgeliefert wird, wenn der vordere Lagerbehälter entleert ist. Langsamläufer-Artikel werden vorzugsweise dynamisch gelagert, d. h. nach Erledigung eines Kommissionierauftrags mittels Regalfahrzeug 20 aus dem Kommissionierbereich 60 wieder in das Regallager 50 zurückgefördert.

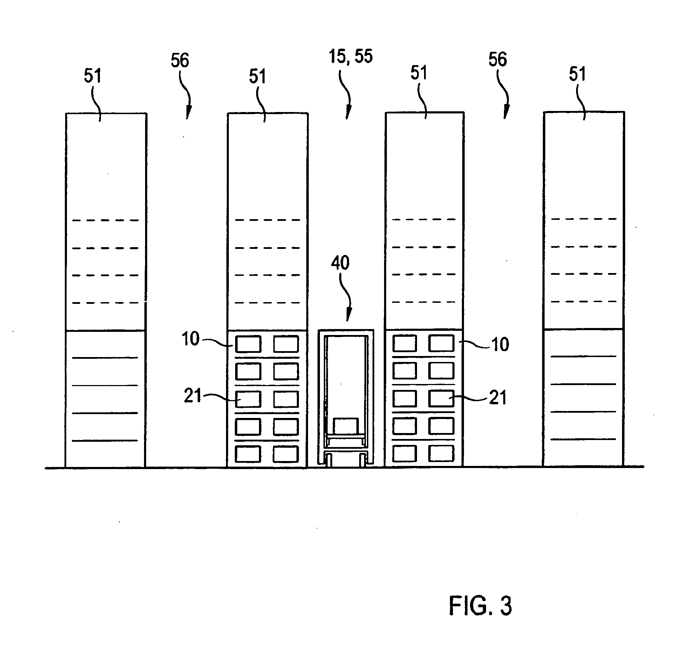

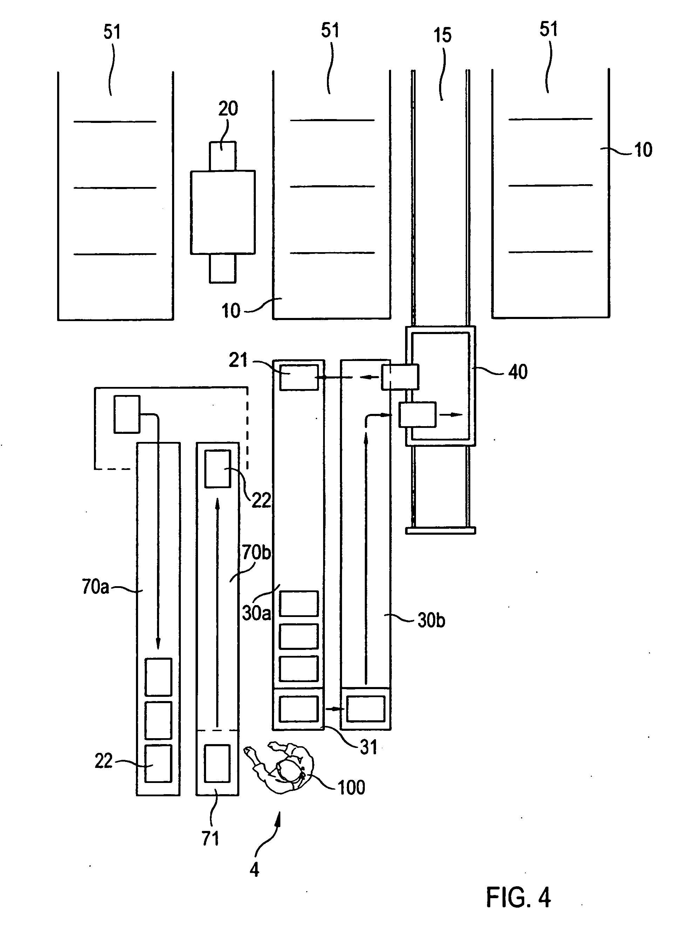

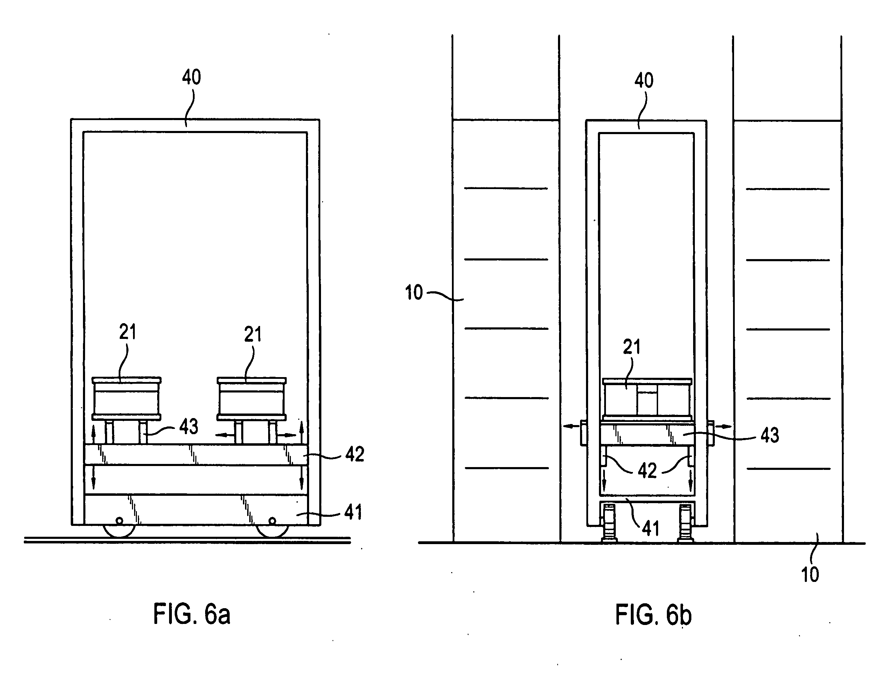

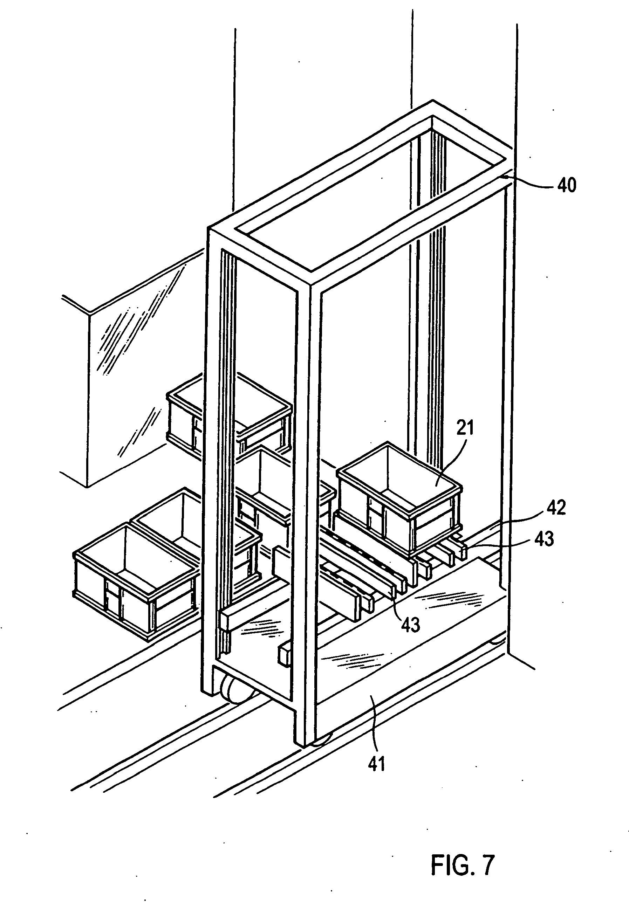

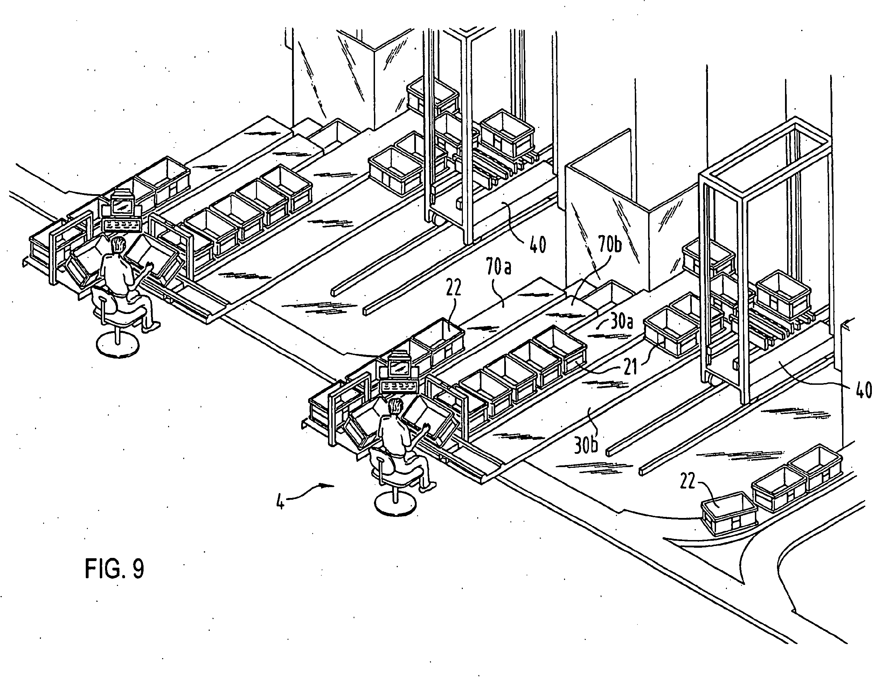

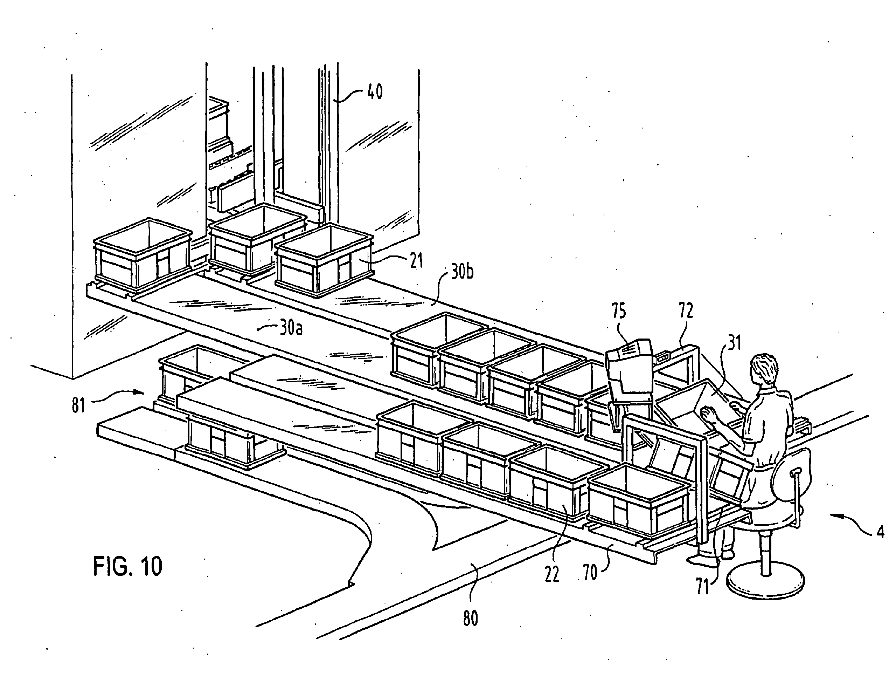

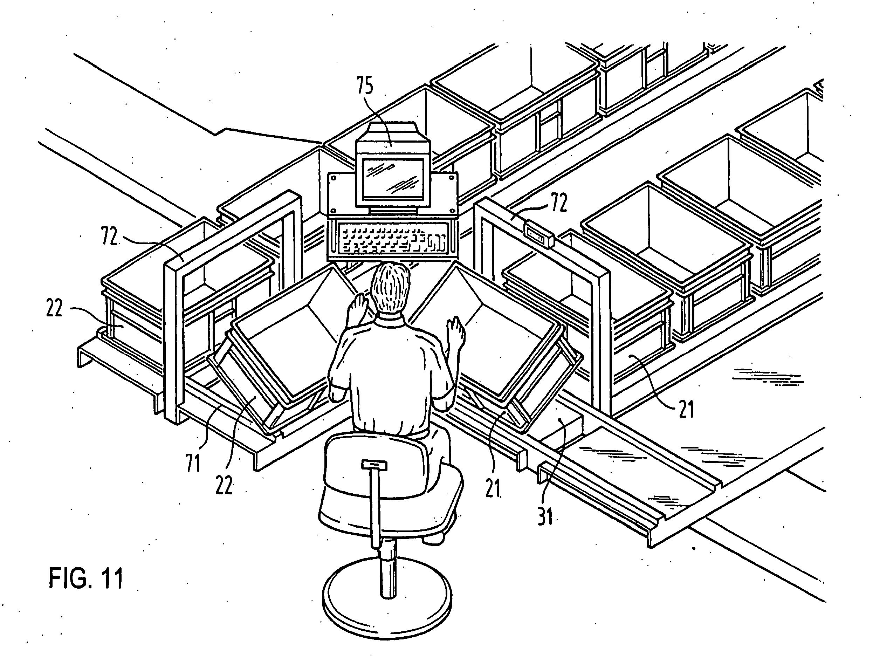

Fig. 3 zeigt eine schematische Querschnittsansicht des Kommissionierpufferbereichs 60 und Fig. 4 eine schematische Draufsicht auf den Kommissionierpufferbereich 60 sowie das anschließende Fördersystem und den Kommissionierplatz 4 eines Ausführungsbeispiels des erfindungsgemäßen Kommissioniersystems. Der Kommissionierpufferbereich beschränkt sich auf einen unteren Abschnitt der Regalreihen 51, der durch das Pickfahrzeug 40, welches später unter Bezugnahme auf die Fig. 6 und 7 im Detail erläutert wird, erreichbar ist. Im gezeigten Ausführungsbeispiel sind die Lagerbehälter 21 auf Pufferplätzen 10 zweifach tief gelagert, wobei eine einfach tiefe bzw. dreifach oder mehrfach tiefe Lagerung ebenso möglich ist. Zwei Lagerregale 51 mit den zugehörigen Pufferplätzen 10, ein in der durch die Regale gebildeten Puffergasse 15 verfahrbares Pickfahrzeug 40 sowie die Fördertechnik mit anschließendem Kommissionierplatz 4 bilden zusammen eine Kommissioniereinheit. Die Pickfahrzeuge 40 sind vorzugsweise auf Schienen entlang der Kommissioniergasse 15 und zu einem stirnseitig des Regallagers angeordneten Umladebereich verfahrbar, an dem Lagerbehälter 21 vom Pickfahrzeug 40 auf einen Endlosförderer, beispielsweise ein Förderband 30 abgegeben werden und von diesem auf das Pickfahrzeug 40 aufgenommen werden. Zu diesem Zweck weist das Pickfahrzeug 40 vorzugsweise Lastaufnahmemittel zur Aufnahme von zwei in Längsrichtung hintereinander angeordneten Lagerbehältern auf. Wie in Fig. 4 dargestellt ist, werden die für einen Kommissionierauftrag benötigten Lagerbehälter 21 vom Pickfahrzeug 40 auf ein Förderband 30 übergeben und dort nacheinander einer Lagerbehälter-Kommissionierposition 31 am Kommissionierplatz 4 zugeführt. Der Kommissionierplatz 4 wird weiter unten unter Bezugnahme auf Fig. 9 bis 11 im Detail erläutert werden.

Für einen Auftrag bereitgestellte leere Auftragsbehälter 22 werden mit einer separaten Fördertechnik 70 einer Auftragsbehälter-Kommissionierposition 71 zugeführt, die ebenso wie die Lagerbehälter-Kommissionierposition 31 in Reichweite der am Kommissionierplatz 4 befindlichen Kommissionierperson 100 angeordnet ist. Der Kommissionierer 100 lädt dann auf Anweisung den/die benötigten Artikel aus dem Lagerbehälter 21 in den Auftragsbehälter 22 um. Der Lagerbehälter wird dann mit dem rücklaufenden Förderband 30 wieder dem Pickfahrzeug 40 übergeben (siehe Fig. 4) und auf den Pufferplätzen 10 im Kommissionierbereich 60 rückgelagert. Bei Schnelläufer-Artikeln verbleibt der Lagerbehälter im Kommissionierpufferbereich, während bei Langsamläufer-Artikeln eine weitere Rücklagerung in das Lagerregal mittels des Regalfahrzeugs 20 erfolgen kann. Der Auftragsbehälter 22 verbleibt solange an der Auftragsbehälter-Kommissionierposition 71, bis er entweder voll oder der Auftrag abgearbeitet ist. Anschließend wird der Auftragsbehälter über die Rückfördereinrichtung 70b entweder (im Falle eines vollständig abgearbeiteten Auftrags) der Packstelle zugeführt oder einer weiteren Kommissioniereinheit zur Vervollständigung des Auftrags. Der Kommissioniervorgang wird weitestgehend automatisiert, so daß für den Kommissionierer nur noch die (ergonomisch optimierte) Tätigkeit des Umladens eines oder mehrerer Artikel vom Lagerbehälter in den Auftragsbehälter verbleibt, wobei der Kommissionierer vorzugsweise Anweisungen bezüglich der umzuladenden Artikel von der Systemsteuerung per Bildschirm erhält.

Mit dem erfindungsgemäßen Kommissioniersystem ist es auch auf einfache Art und Weise möglich, einzelne Kommissioniereinheiten bestimmten Warengruppen zuzuordnen. Beispielhaft sei angenommen, das Gesamtsystem diene zur Kommissionierung von Artikeln einer Einzelhandelskette. Es ist dann möglich, einzelne Regalfronten des Kommissionierpufferbereichs 60 einer bestimmten Warengruppe, etwa Putzmitteln oder Lebensmitteln zuzuordnen. In der Regel werden dann keine Behälter aus dem Kommissionierpufferbereich 60 ins Regallager 50 zurückgebracht. Eine derartige Gruppierung vereinfacht und beschleunigt den Kommissioniervorgang insbesondere bei Schnelläufer-Artikeln, die häufig in Warengruppen nachgefragt werden.

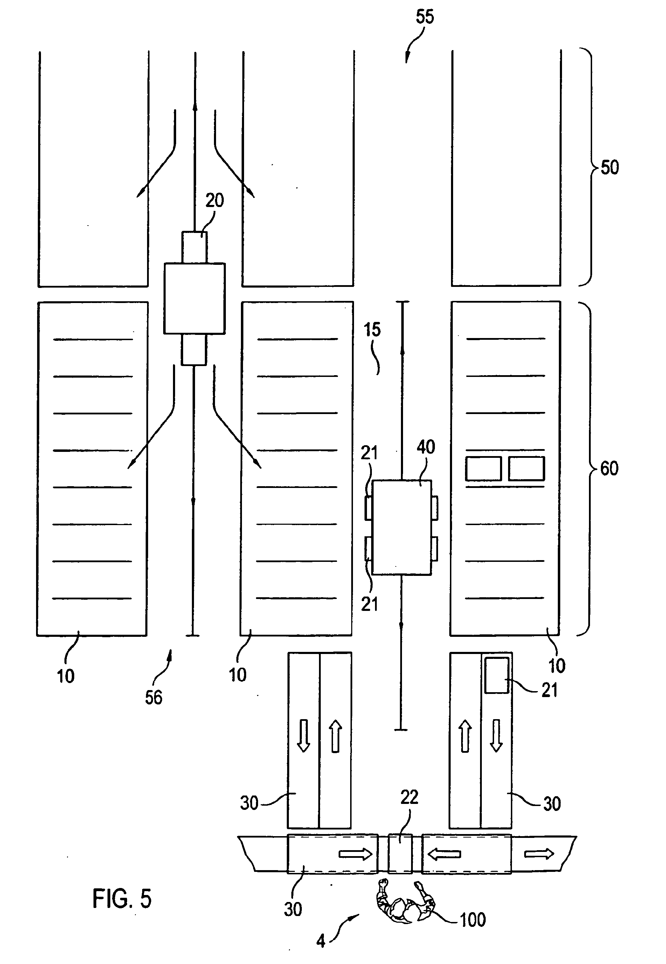

Fig. 5 zeigt in Draufsicht eine Kommissioniereinheit eines alternativen Ausführungsbeispiels des erfindungsgemäßen Kommissioniersystems. Regallager 50, Kommissionierbereich 60 und Pickfahrzeug 40 sind wie bei dem in Fig. 4 gezeigten Ausführungsbeispiel ausgebildet. Zur Befüllung der Pufferplätze 10 von der Rückfront her dient ebenso wie bei dem Ausführungsbeispiel von Fig. 4 ein in der Regalgasse 55 verfahrbares Regalfahrzeug 20. Bei dem in Fig. 5 dargestellten Ausführungsbeispiel werden die Lagerbehälter 21 dem Kommissionierer 100 jedoch mittels Förderbändern 30 von zwei Seiten her zugeführt. Der jeweilige Auftragsbehälter 22 wird von einer (nicht dargestellten) separaten Fördertechnik unterhalb des Förderbands 30 einem zentralen tiefer angeordneten Stellplatz zugefördert. Per Bildschirm erhält der Kommissionierer 100 am Kommissionierplatz 4 Anweisung, von welchem der bereitgestellten Lagerbehälter ein Artikel in den zentralen Auftragsbehälter umgeladen werden soll. Der Weitertransport der Auftragsbehälter sowie der Rücktransport teilgefüllter Lagerbehälter (Restbehälter) in den Kommissionierbereich erfolgt ähnlich wie bei dem oben erläuterten Ausführungsbeispiel. Bei beiden Ausführungsbeispielen ist vorzugsweise vorgesehen, daß - etwa über das Fördersystem für die Auftragsbehälter - nicht mehr benötigte entleerte Lagerbehälter zur weiteren Verwendung abtransportiert werden.

Das Pickfahrzeug 40 wird im folgenden anhand eines in den Fig. 6 und 7 gezeigten Ausführungsbeispiels im Detail erläutert. Das Pickfahrzeug 40 weist ein Chassis 41 auf, an dem ein Rohrrahmen sowie Räder angeordnet sind. Das Ausführungsbeispiel betrifft ein schienengebundenes Pickfahrzeug, wobei nichtschienengebundene Varianten ebenso möglich sind. An dem Rohrrahmengestell sind zwei mittels einer (nicht dargestellten) Hubvorrichtung vertikal bewegliche Längsträger 42 angebracht, auf denen wiederum Lastaufnahmemittel 43 für zwei in Bewegungsrichtung des Fahrzeugs hintereinander aufzunehmende Lagerbehälter 21 vorgesehen sind. Vorzugsweise sind die Lastaufnahmemittel 43 mittels (nicht dargestellter) Längsverschiebemittel in Längsrichtung (Bewegungsrichtung) des Pickfahrzeugs 40 verschiebbar. Außerdem weist das Lastaufnahmemittel vorzugsweise etwa als Riemenförderer ausgebildete Querfördermittel zur Aufnahme von Lagerbehältern auf und zur Abgabe von Lagerbehältern von dem Fahrzeug 40 auf. Weiterhin ist es möglich, für die beiden Lastaufnahmemittel 43 (nicht dargestellt) separate Hubvorrichtungen vorzusehen, so daß zwei Behälter aus unterschiedlichen Ebenen gleichzeitig gehandhabt werden können, was die Flexibilität und Pickleistung des Systems weiter erhöht. Das Pickfahrzeug 40 ist insgesamt kompakt und leichtgewichtig konstruiert, so daß hohe Beschleunigungswerte und kurze Fahrzeiten und dadurch eine hohe Pick- und Kommissionierleistung möglich sind.

Ein Ausführungsbeispiel des Kommissionierplatzes 4 des erfindungsgemäßen Kommissioniersystems wird nun unter Bezugnahme auf die Fig. 9 bis 11 erläutert. Vom Pickfahrzeug 40 gelangen die Lagerbehälter 21 mittels einer (nicht dargestellten) Querfördereinrichtung auf das Zuführband 30a, wo die Behälter in der für die Abarbeitung eines Kommissionierauftrags vorgesehenen Reihenfolge - d.h. sequenziert - eine Warteschlange zur Lagerbehälter-Kommissionierposition 31 bilden. Eine Querfördertechnik 80 führt auf einer darunterliegenden Ebene Auftragsbehälter 22 einer Hubeinrichtung 81 zu, die die Auftragsbehälter auf ein weiteres Förderband 70 anheben, das die Auftragsbehälter einer Auftragsbehälter-Kommissionierposition 71 zuführt. Dem am Kommissionierplatz 4 auf einem Sitzarbeitsplatz befindlichen Kommissionierer 100 werden Lagerbehälter 21 und Auftragsbehälter 22 in einem rechten Winkel zueinander in bequemer Griffreichweite bereitgestellt. Zur weiteren Verbesserung der Ergonomie und der Einsichtmöglichkeit in die Behälter ist eine (nicht dargestellte) Verkippungseinrichtung zum Verkippen der Behälter vorgesehen. Der Kommissionierer erhält auf einem zentral angeordneten Bildschirm 75 seine Arbeitsanweisungen, beispielsweise zwei Gegenstände aus dem Lagerbehälter 21 in den Auftragsbehälter 22 umzuladen. Die Ausführung der Anweisungen wird mittels Lichtgitter-Sensoreinrichtungen 72 überprüft, die erfassen, wenn die Hand des Kommissionierers in den Lagerbehälter 21 bzw. den Auftragsbehälter 22 greift. Zusätzlich kann auch eine manuelle Quittierung auf der unter dem Bildschirm vorgesehenen Tastatur erfolgen. Die Lichtgitter-Sensoreinrichtungen 72 können außerdem der automatischen Systemablaufsteuerung dienen. Mit der Lichtgitter-Sensoreinrichtung am Lagerbehälter 21 wird erfaßt, wenn der Kommissionierer dem Lagerbehälter einen Gegenstand entnimmt und mit der Lichtgitter-Sensoreinrichtung am Auftragsbehälter wird erfaßt, wenn der Kommissionierer den Artikel in den Auftragsbehälter hineinlegt. Ist der letztere Vorgang (Hineinlegen des Artikels in den Auftragsbehälter 22) abgeschlossen, so veranlaßt der Lagerverwaltungsrechner den Weitertransport des Lagerbehälters von der Lagerbehälter-Kommissionierposition 31 und die Zuführung des in der Warteschlange wartenden nächsten Lagerbehälters. Wenn von der Lichtgitter-Sensoreinrichtung dann erfaßt wird, daß der Kommissionierer in den nächsten Lagerbehälter greift, veranlaßt der Lagerverwaltungsrechner den Abtransport des Auftragsbehälters 22 in den Fällen, in denen der nächste Artikel in einen neuen Auftragsbehälter geladen werden soll, weil entweder ein Auftrag abgeschlossen ist oder der Auftragsbehälter voll ist. So wird eine automatisierte funktionssichere Ablaufsteuerung des Kommissioniervorgangs sichergestellt.

Teilentleerte Auftragsbehälter 21 werden dann vom Rücklaufband 30b wieder dem Pickfahrzeug 40 zur Rücklagerung im Kommissionierbereich 60 zugeführt. Vollständig entleerte Lagerbehälter 21 können vom Kommissionierer manuell auf das Rücklaufförderband 70b für die Auftragsbehälter gelegt werden, so daß diese genauso wie abgearbeitete Auftragsbehälter über die Hubeinrichtung 81 der Querfördertechnik 80 zur Weiterverarbeitung zugeführt werden. Falls ein Auftragsbehälter 22 für einen Auftrag vollständig gefüllt ist, wird dieser mit der Querfördertechnik 80 der Verpackungs- bzw. Versandstelle (nicht gezeigt) zugeführt. Wenn der Auftragsbehälter noch nicht fertig bearbeitet ist, wird er mit der Querförderungtechnik 80 einer weiteren Kommissioniereinheit, wie sie etwa in Fig. 9 links oben dargestellt ist, zur Weiterbearbeitung des Kommissionierauftrags zugeführt. Der Kommissionierplatz 4 erlaubt eine hohe Kommissionierleistung und -sicherheit bei gleichzeitig ergonomisch optimiertem Arbeitsablauf.

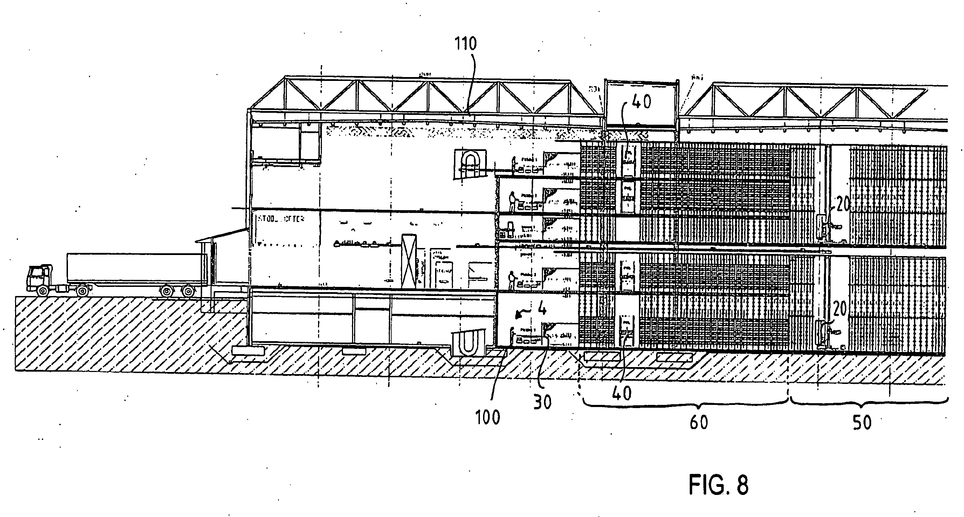

Fig. 8 zeigt eine Seitenansicht eines beispielhaften Lagers mit erfindungsgemäßem Kommissioniersystem. Das System ist in eine Halle 110 integriert, die in mehrere Ebenen aufgeteilt ist, wobei in Fig. 8 vier Ebenen mit jeweiligen Kommissionierplätzen 4 gezeigt sind, an denen Kommissionierer 100 arbeiten. Auf der rechten Bildseite ist ein Hochregallager 50 dargestellt, das auf zwei Ebenen aufgeteilt ist, die von jeweils separaten Regalfahrzeugen 20 bedient werden. Das in Fig. 8 unten dargestellte Regalfahrzeug 20 fährt drei Stockwerke des Hochregallagers ab und beliefert zwei Kommissionierpuffer im Kommissionierpufferbereich 60. Das in der Fig. oben dargestellte Regalfahrzeug 20 fährt ebenfalls drei Stockwerke des Hochregallagers ab und beliefert Kommissionierarbeitsplätze 4 im Kommissionierpufferbereich 60. Die unterste Ebene im oberen Kommissionierpufferbereich 60 wird bei dem gezeigten Ausführungsbeispiel als Behälterlager genutzt. Dies ist vorteilhaft, wenn die Kommissionierpuffer im oberen Kommissionierpufferbereich überwiegend mit Langsamläufer-Artikeln bestückt sind, d. h. viele Behälter ständig vom Kommissionierpufferbereich wieder ins Behälterlager zurück transportiert werden müssen.

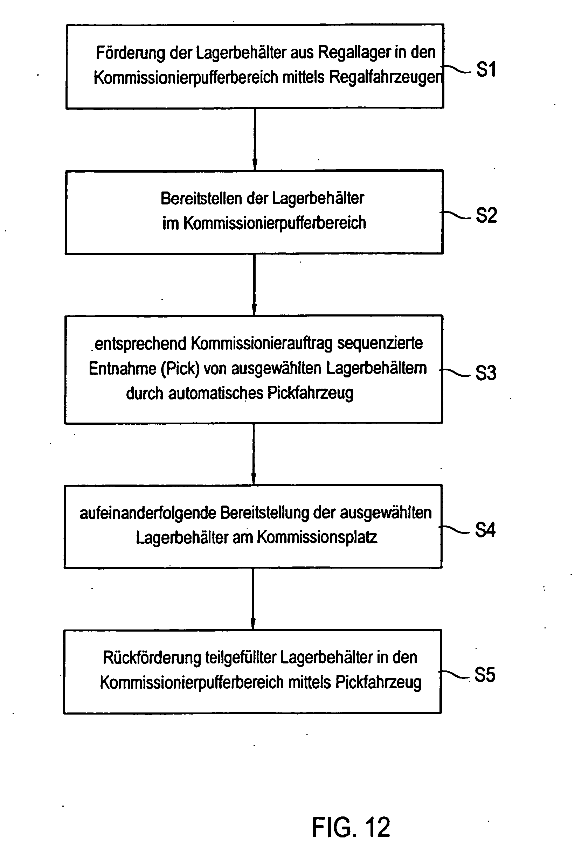

Im folgenden wird ein Ausführungsbeispiel des erfindungsgemäßen Kommissionierverfahrens unter Bezugnahme auf das Flußdiagramm von Fig. 12 erläutert. Im Verfahrensschritt S1 werden die Lagerbehälter 21 durch die Regalfahrzeuge 20 aus dem Regallager 50 in den Kommissionierbereich 60 gefördert und dort in Verfahrensschritt S2 auf Pufferplätzen 10 bereitgestellt. Die Bereitstellung kann dabei sowohl dynamisch (bei Langsamläufer-Artikeln) als auch statisch (bei Schnelläufer-Artikeln) erfolgen. Ein nicht dargestellter Lagerverwaltungsrechner ermittelt aus den vorliegenden Kommissionieraufträgen einen optimierten Verfahrensablauf und steuert die für diese optimierte Ausführung der Kommissionieraufträge erforderlichen Einzelvorgänge. So werden in Verfahrensschritt S3 die für die Abarbeitung eines Kommissionerauftrags erforderlichen Lagerbehälter 21 in der dem optimierten Verfahrensablauf entsprechenden Reihenfolge (d.h. sequenziert) durch das Pickfahrzeug 40 den Kommissionierplätzen 10 entnommen und daraufhin der Warteschleife auf dem Förderband 30 übergeben. Die gepickten Lagerbehälter werden so an der Lagerbehälter-Kommissionierposition 31 am Kommissionierplatz in der für die Ausführung des Kommissioniervorgangs erforderlichen Reihenfolge bereitgestellt (Verfahrensschritt S4), so daß der am Kommissionierplatz 4 arbeitende Kommissionierer 100 mit Hilfe von über einen Bildschirm angezeigten Anweisungen die jeweiligen Umladevorgänge in einen ebenfalls bereitgestellten Auftragsbehälter 22 ausführen kann. Teilgefüllte Lagerbehälter werden anschließend in Verfahrensschritt S5 mittels des Pickfahrzeugs 40 wieder in den Kommissionierbereich (und im Falle der dynamischen Lagerung in das Regallager 50) rückgelagert. Entleerte Lagerbehälter werden zur Weiterverarbeitung der Fördertechnik 70 übergeben und (an diesem Kommissionierplatz) fertig bearbeitete Auftragsbehälter werden der Querfördertechnik 80 zur Übergabe an die Verpackungs- bzw. Versandstelle (im Falle von abgearbeiteten Kommissionierauftragen) sowie weiteren Kommissionierplätzen zur Vervollständigung des Kommissionierauftrags übergeben.

Die vorstehend beschriebene Erfindung ermöglicht so durch die konsequente Umsetzung des Prinzips ''Ware-zu-Mann'' eine Steigerung der Pickleistung, eine Minimierung der Fehlerquote sowie eine wesentliche Verbesserung der Arbeitsergonomie.

### Bezugszeichenliste

- 1: Behälterlager
- 2: Statische Durchlaufkanäle
- 3: Dynamische Durchlaufkanäle (Wechselplätze)
- 4: Kommissionierplatz
- 5: Behälter
- 6: Förderband
- 10: Pufferplätze
- 15: Pickfahrzeug-Gasse
- 20: Regalfahrzeug (RFZ)
- 21: Lagerbehälter
- 22: Auftragsbehälter
- 30: Fördertechnik für Lagerbehälter
- 31: Lagerbehälter-Kommissionierposition
- 40: Pickfahrzeug
- 41: Chassis
- 42: Längsträger
- 43: Lastaufnahmemittel
- 50: Regallager
- 51: Regalreihen
- 55, 56: RFZ-Gassen
- 60: Kommissionierpufferbereich
- 70: Fördertechnik für Auftragsbehälter
- 71: Auftragsbehälter-Kommissionierposition
- 72: Lichtgitter-Sensoreinrichtung
- 75: Bildschirm
- 80: Querfördertechnik
- 81: Hubeinrichtung
- 100: Kommissionierperson
- 110: Halle

## Patentansprüche

1. System zum Kommissionieren von in Lagerbehältern befindlichen Artikeln mit:
einem Regallager (50) zum Lagern der Artikel in Lagerbehältern (21),
einem Kommissionierpufferbereich (60) zum Bereitstellen der Lagerbehälter (21) auf Pufferplätzen (10), welche Lagerbehälter (21) mittels eines Regalfahrzeugs (20) zwischen Regallager (50) und Kommissionierpufferbereich (60) gefördert werden,
wenigstens einem rechnergesteuerten Pickfahrzeug (40) zur entsprechend einem Kommissionierauftrag sequenzierten Entnahme von Lagerbehältern (21) aus den Pufferplätzen (10), und zum Rücktransport teilentleerter Lagerbehälter (21) auf Pufferplätze (10), und
wenigstens einem Kommissionierplatz (4), an dem einem Kommissionierer (100) die Lagerbehälter (21) zur Entnahme von Artikeln und zum Umladen derselben in ebenfalls bereitgestellte Auftragsbehälter (22) aufeinanderfolgend zugeführt und bereitgestellt werden.

2. Kommissioniersystem nach Anspruch 1, wobei sich der Kommissionierpufferbereich (60) an das Regallager (50) anschließt und mittels des Regalfahrzeugs (20) durch eine gemeinsame Regalfahrzeuggasse (56) befüllbar ist.

3. Kommissioniersystem nach Anspruch 1 oder 2, wobei der Kommissionierpufferbereich (60) im unteren Abschnitt des Regallagers (50) angeordnet ist.

4. Kommissioniersystem nach Anspruch 1, 2 oder 3, wobei jedem Kommissionierarbeitsplatz jeweils ein Pickfahrzeug (40) zugeordnet ist.

5. Kommissioniersystem nach einem der Ansprüche 1 bis 4, wobei das Pickfahrzeug Lastaufnahmemittel (43) zur Aufnahme von zwei in Bewegungsrichtung des Pickfahrzeugs (40) hintereinander angeordneten Lagerbehältern (21) aufweist.

6. Kommissioniersystem nach Anspruch 5, wobei das Pickfahrzeug (40) eine Hubvorrichtung zum Anheben und Absenken der Lastaufnahmemittel (43) aufweist.

7. Kommissioniersystem nach Anspruch 5 oder 6, wobei das Pickfahrzeug (40) eine Querverschiebeeinrichtung zum Aufnehmen und Abgeben von Lagerbehältern (21) auf/von dem Lastaufnahmemittel (43) aufweist.

8. Kommissioniersystem nach einem der Ansprüche 5 bis 7, wobei das Pickfahrzeug (40) Längsverschiebemittel zur Längsverschiebung der Lastaufnahmemittel (43) aufweist.

9. Kommissioniersystem nach Anspruch 5 und 6, aufweisend zwei separate Hubvorrichtungen für beide Lagerbehälter (21).

10. Kommissioniersystem nach einem der Ansprüche 1 bis 9, aufweisend ein Stetigfördersystem (30) zum Fördern der Lagerbehälter (21) vom Pickfahrzeug (40) zum Kommissionierplatz (4).

11. Kommissioniersystem nach Anspruch 10, aufweisend ein zweites Stetigfördersystem (70) zur Zuführung der Auftragsbehälter (22) zum Kommissionierplatz (4).

12. Kommissioniersystem nach Anspruch 11, wobei am Kommissionierplatz (4) Lagerbehälter (21) und Auftragsbehälter (22) im rechten Winkel zueinander angeordnet bereitgestellt werden.

13. Kommissioniersystem nach Anspruch 11 oder 12, aufweisend einen Bildschirm (75) zur Anzeige von Kommissionieranweisungen an den Kommissionierer (100).

14. Kommissioniersystem nach einem der Ansprüche 11 bis 13, aufweisend eine Lichtgitter-Sensoreinrichtung (72) an der Lagerbehälter-Kommissionierposition (31) und/oder der Auftragsbehälter-Kommissionierposition (71) zur Kontrolle des Umladevorgangs.

15. Verfahren zum Kommissionieren von in Lagerbehältern befindlichen Artikeln, welche Lagerbehälter (21) in einem Regallager (50) gelagert werden, aufweisend die Schritte:
- Förderung der Lagerbehälter (21) aus dem Regalllager (50) in einen Kommissionierpufferbereich (60) und Bereitstellen der Lagerbehälter (21) auf Pufferplätzen (10),
- entsprechend einem Kommissionierauftrag sequenzierte Entnahme bereitgestellter Lagerbehälter (21) durch ein rechnergesteuertes Pickfahrzeug (40),
- aufeinanderfolgende Bereitstellung der Lagerbehälter (21) sowie von Auftragsbehältern (22) an einem Kommissionierplatz (4), so daß einer Kommissionierperson (100) das Umladen von im Lagerbehälter (21) befindlichen Artikeln in den Auftragsbehälter (22) ermöglicht wird, und
- Rücktransport teilgefüllter Lagerbehälter (21) in den Kommissionierpufferbereich (60) mittels des Pickfahrzeugs (40).

16. Verfahren nach Anspruch 15, wobei die Förderung der Lagerbehälter (21) aus dem Regallager (50) in den Kommissionierpufferbereich (60) mit mehreren Regalfahrzeugen (20) erfolgt.

17. Verfahren nach Anspruch 15 oder 16, wobei das Pickfahrzeug (40) aufgenommene Lagerbehälter (21) an ein Stetigfördersystem (30) übergibt, welches die Lagerbehälter (21) einer Lagerbehälter-Kommissionierposition (31) am Kommissionierplatz (4) aufeinanderfolgend zuführt.

18. Verfahren nach Anspruch 17, wobei die Auftragsbehälter (22) mittels eines zweiten Stetigfördersystems (70) einer Auftragsbehälter-Kommissionierposition (71) am Kommissionierplatz (4) zugeführt werden.

19. Verfahren nach einem der Ansprüche 15 bis 18, wobei Lagerbehälter (21) und Auftragsbehälter (22) in rechtem Winkel zueinander und beide in Reichweite einer Kommissionierperson (100) am Kommissionierplatz (4) bereitgestellt werden.

20. Verfahren nach einem der Ansprüche 15 bis 19, wobei am Kommissionierplatz Lagerbehälter (21) von zwei Seiten zugeführt werden.

21. Verfahren nach einem der Ansprüche 15 bis 20, wobei der Kommissionierperson (100) mittels Bildschirmanzeige (75) Kommissionieranweisungen signalisiert werden.

## Claims

1. System for order picking articles disposed in storage containers, comprising:
a storage shelf (50) for storing the articles in storage containers (21),
a commissioning buffer region (60) for provision of storage containers (21) in buffer locations (10), which storage containers (21) are conveyed by means of a shelving vehicle (20) between storage shelves (50) and order picking buffer region (60),
at least one computer-controlled picking vehicle (40) for the removal, sequenced according to a picking order, of storage containers (21) from the buffer locations (10) and for returning partially emptied storage containers (21) to storage locations (10), and
at least one order picking location (4) at which the storage containers (21) are successively supplied and provided to a commissioner (100) for the removal of articles and for transferring the same into order containers (22) that have likewise been provided.

2. Order picking system according to claim 1, wherein the order picking buffer region (60) adjoins the storage shelf (50) and can be filled by means of the shelving vehicle (20) through a common shelving vehicle lane (56).

3. Order picking system according to claim 1 or 2, wherein the order picking buffer region (60) is arranged in the lower portion of the storage shelf (50).

4. Order picking system according to claim 1, 2 or 3, wherein one respective picking vehicle (40) is associated with each order picking workstation.

5. Order picking system according to any one of claims 1 to 4, wherein the picking vehicle comprises load-receiving means (43) for receiving two storage containers (21) arranged one after the other in the direction of movement of the picking vehicle (40).

6. Order picking system according to claim 5, wherein the picking vehicle (40) comprises a lifting device for lifting and lowering the load-receiving means (43).

7. Order picking system according to claim 5 or 6, wherein the picking vehicle (40) comprises a transverse displacement mechanism for receiving and delivering storage containers (21) on/from the load-receiving means (43).

8. Order picking system according to any one of claims 5 to 7, wherein the picking vehicle (40) comprises longitudinal displacement means for longitudinal displacement of the load-receiving means (43).

9. Order picking system according to claim 5 and 6, comprising two separate lifting devices for the two storage containers (21).

10. Order picking system any one of claims 1 to 9, comprising a continuous conveying system (30) for conveying the storage containers (21) from the picking vehicle (40) to the order picking location (4).

11. Order picking system according to claim 10, comprising a second continuous conveying system (70) for supplying order containers (22) to the order picking location (4).

12. Order picking system according to claim 11, wherein storage containers (21) and order containers (22) are provided so as to be arranged at a right angle to each other at the order picking location (4).

13. Order picking system according to claim 11 or 12, comprising a screen (75) for displaying order picking instructions to the commissioner (100).

14. Order picking system according to any one of claims 11 to 13, comprising a light grid-sensor device (72) at the storage container order picking position (31) and/or the order container order picking position (71) for checking the transfer process.

15. Method for order picking articles disposed in storage containers, which storage containers (21) are stored in a storage shelf (50), comprising the following steps:
- conveying the storage containers (21) from the storage shelf (50) into an order picking buffer
region (60) and providing the storage containers (21) in buffer locations (10),
- removal, sequenced according to an order picking order, of provided storage containers (21) by a computer-controlled picking vehicle (40),
- successive provision of storage containers (21) and order containers (22) at an order picking location (4), so it is possible for a commissioner (100) to transfer articles disposed in a storage container (21) into the order container (22), and
- returning partially filled storage containers (21) to the order picking buffer region (60) by means of the picking vehicle (40).

16. Method according to claim 15, wherein the storage containers (21) are conveyed from the storage shelf (50) into the order picking buffer region (60) using a plurality of shelving vehicles (20).

17. Method according to claim 15 or 16, wherein the picking vehicle (40) transfers received storage containers (21) to a continuous conveying system (30) which successively supplies the storage containers (21) to a storage container order picking position (31) at the order picking location (4).

18. Method according to claim 17, wherein the order containers (22) are supplied by means of a second continuous conveying system (70) to an order container order picking position (71) at the order picking location (4).

19. Method according to any one of claims 15 to 18, wherein storage containers (21) and order containers (22) are provided at a right angle to each other and both are provided within the range of a commissioner (100) at the order picking location (4).

20. Method according to any one of claims 15 to 19, wherein storage containers (21) are supplied from two sides at the order picking location.

21. Method according to any one of claims 15 to 20, wherein order picking instructions are signalled to the commissioner (100) by means of screen display (75).

## Revendications

1. Système de préparation des commandes concernant des articles se trouvant dans des bacs de stockage, comprenant :
un stockage sur rayonnages (50) pour stocker les articles dans des bacs de stockage (21),
une zone tampon de préparation des commandes (60), pour tenir prêts les bacs de stockage (21) sur des emplacements tampon (10), les bacs de stockage (21) étant transportés entre le stockage sur rayonnages (50) et la zone tampon de préparation des commandes (60) au moyen d'un véhicule pour rayonnages (20),
au moins un véhicule de prélèvement (40) commandé par ordinateur, pour effectuer le prélèvement séquence, de manière correspondante à un ordre de préparation des commandes, de bacs de stockage (21), depuis les emplacements tampon (10), et pour le transport de retour de bacs de stockage (21) partiellement vidés, à des emplacements tampon (10), et
au moins un poste de préparation des commandes (4), auquel les bacs de stockage (21) pour le prélèvement des articles et pour le transbordement de ceux-ci dans des bacs de commande (22) également tenus prêts, sont, les uns à la suite des autres, amenés à un préparateur de commandes (100) et tenus prêts.

2. Système de préparation des commandes selon la revendication 1, où la zone tampon de préparation des commandes (60) se raccorde au stockage en rayonnage (50) et peut être garnie au moyen du véhicule pour rayonnages (20), en évoluant dans une ruelle pour véhicules pour rayonnages (56) commune.

3. Système de préparation des commandes selon la revendication 1 ou 2, dans lequel la zone tampon de préparation des commandes (60) est disposée dans le tronçon inférieur du stockage sur rayonnages (50).

4. Système de préparation des commandes selon la revendication 1, 2 ou 3, dans lequel un véhicule de prélèvement (40) est associé à chaque poste de travail de préparation des commandes.

5. Système de préparation des commandes selon l'une des revendications 1 à 4, dans lequel le véhicule de prélèvement présente des moyens supports de charges (43), pour supporter deux bacs de stockage (21), disposés l'un derrière l'autre dans la direction de déplacement du véhicule de prélèvement (40).

6. Système de préparation des commandes selon la revendication 5, dans lequel le véhicule de prélèvement (40) présente un dispositif de levage, pour lever et abaisser les moyens supports de charges (43).

7. Système de préparation des commandes selon la revendication 5 ou 6, dans lequel le véhicule de prélèvement (40) présente un dispositif de déplacement transversal, pour supporter et déposer des bacs de stockage (21) sur/depuis les moyens supports de charges (43).

8. Système de préparation des commandes selon l'une des revendications 5 à 7, dans lequel le véhicule de prélèvement (40) présente des moyens de déplacement longitudinal, pour déplacer longitudinalement les moyens supports de charge (43).

9. Système de préparation des commandes selon les revendications 5 et 6, présentant deux dispositifs de levage séparés pour les deux bacs de stockage (21).

10. Système de préparation des commandes selon l'une des revendications 1 à 9, présentant un système de convoyage continu (30), pour convoyer les bacs de stockage (21), du véhicule de prélèvement (40) au poste de préparation des commandes (4).

11. Système de préparation des commandes selon la revendication 10, présentant un deuxième système de convoyage continu (70), pour amener les bacs de commande (22) au poste de préparation des commandes (4).

12. Système de préparation des commandes selon la revendication 11, dans lequel des bacs de stockage (21) et des bacs de commande (22) sont disposés à angle droit les uns par rapport aux autres au poste de préparation des commandes (4).

13. Système de préparation des commandes selon la revendication 11 ou 12, présentant un écran (75) pour l'affichage d'instructions de préparation des commandes destinées au préparateur de commandes (100).

14. Système de préparation des commandes selon l'une des revendications 11 à 13, présentant un dispositif capteur à grille lumineuse (72) à la position de préparation des commandes des bacs de stockage (31) et/ou à la position de préparation des commandes des bacs de commande (71), pour assurer le contrôle du processus de transbordement.

15. Procédé de préparation des commandes concernant des articles se trouvant dans des bacs de stockage, les bacs de stockage (21) étant stockés dans un stockage sur rayonnages (50), présentant les étapes suivantes :
- convoyage des bacs de stockage (21), du stockage sur rayonnages (50) en une zone tampon de préparation des commandes (60), et fourniture des bacs de stockage (21) à des emplacements tampon (10),
- prélèvement séquencé, de manière correspondant à un ordre de préparation des commandes, de bacs de stockage (21) tenus prêts, par un véhicule de prélèvement (40) commandé par ordinateur,
- fourniture successive, des bacs de stockage (21) ainsi que des bacs de commande (22), à un poste de préparation des commandes (4), de manière qu'il soit possible à un préparateur de commandes (100) de transborder dans les bacs de commande (22) des articles se trouvant dans le bac de stockage (21), et
- transport de retour des bacs de stockage (21) partiellement remplis, dans la zone tampon de préparation de commandes (60), au moyen du véhicule de prélèvement (40).

16. Procédé selon la revendication 15, dans lequel le convoyage des bacs de stockage (21), du stockage sur rayonnages (50) dans la zone tampon de préparation de commandes (60) s'effectue en utilisant plusieurs véhicules pour rayonnage (20).

17. Procédé selon la revendication 15 ou 16, dans lequel le véhicule de prélèvement (40) transfère des bacs de stockage (21) supportés à un système de convoyage continu (30), qui amène les uns à la suite des autres les bacs de stockage (21) à une position de préparation des commandes de bacs de stockage (31) au poste de préparation des commandes (4).

18. Procédé selon la revendication 17, dans lequel les bacs de commande (22) sont amenés, au moyen d'un deuxième système de convoyage continu (70), à une position de préparation des commandes de bacs de commande (71) au poste de préparation des commandes (4).

19. Procédé selon l'une des revendications 15 à 18, dans lequel des bacs de stockage (21) et des bacs de commande (22) sont tenus prêts au poste de préparation des commandes (4), disposés à angle droit les uns par rapport aux autres et les deux étant à portée d'atteinte d'un préparateur de commandes (100).

20. Procédé selon l'une des revendications 15 à 19, dans lequel des bacs de stockage (21) sont amenés depuis deux côtés au poste de préparation de commandes.

21. Procédé selon l'une des revendications 15 à 20, dans lequel des instructions de préparation des commandes sont signalées au préparateur de commandes (100) à l'aide d'un affichage sur écran (75).
